# EUROPEAN PATENT APPLICATION

(11) **EP 4 779 657 A2**
(43) Date of publication of application: **22.07.2026**
(21) Application number: 25212672.7
(22) Date of filing: 31.10.2025
(51) Int. Cl.: H01B 7/04, H01B 7/18, H01B 7/22, H01B 9/00

(54) **WIRELINE CABLE FOR UNDERBALANCE COILED TUBING DRILLING**

(30) Priority: 01.11.2024 US 202418934989
(71) Applicant: Services Pétroliers Schlumberger, 75007 Paris (FR); Schlumberger Technology B.V., 2514 JG The Hague (NL)
(72) Inventor: VARKEY, Joseph, Sugar Land, 77478 (US); ALTINTAS, Burcu Unal, Sugar Land, 77478 (US); MANGUM, Jared M, Sugar Land, 77478 (US); CEVALLOS NAVARRETE, Antonio Mauricio, Sugar Land, 77478 (US)
(74) Representative: Schlumberger Intellectual Property Department

(57) **Abstract**

An electrical cable includes a central electrical conductor disposed in a center portion of the electrical cable and one or more additional electrical conductors, such that the one or more additional electrical conductors are disposed proximate to the central electrical conductor and form a core of the electrical cable. Additionally, the electrical cable includes one or more fillers disposed between the one or more additional electrical conductors. Further, the electrical cable includes a first layer of armor wires disposed circumferentially around an external surface of the core, such that the first layer of armor wires is partially embedded within an inner carbon fiber reinforced polymer layer, and a second layer of armor wires disposed circumferentially around the first layer of armor wires, such that the second layer of armor wires is partially embedded within an outer carbon fiber reinforced polymer layer.

## Description

### BACKGROUND

The present disclosure generally relates to system and methods for providing electric power to downhole tooling used by oilfield drilling and production systems.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

To meet consumer and industrial demand for natural resources, companies often invest significant amounts of time and money in searching for and extracting oil, natural gas, hydrocarbons, and other subterranean resources from the earth. During drilling operations, reservoirs may experience conditions that cause operators to engage in intervention operations. For example, when the reservoir experiences a low formation pressure, the reservoir may be unable to produce resources up through a borehole due to the formation pressure being less than a pressure exerted by a hydrostatic column. To counteract this issue, the operators may utilize a coiled tubing unit to perform intervention operations to ensure that the formation pressure is greater than the pressure from the hydrostatic column. That is, the operator may use the coiled tubing unit to direct pump liquids and/or gases downhole to the base of the borehole in the reservoir, thereby reducing the density of the hydrostatic column. As a result, this intervention operation balances forces generated by the pressure of the hydrostatic column and enables the reservoir to resume flowing and producing resources.

### SUMMARY

This summary is provided to introduce a selection of concepts that are further described below in the detailed description. This summary is not intended to identify key or essential features of the claimed subject matter, nor is it intended to be used as an aid in determining or limiting the scope of the claimed subject matter as set forth in the claims.

In certain embodiments, an electrical cable includes a central electrical conductor disposed in a center portion of the electrical cable and one or more additional electrical conductors, such that the one or more additional electrical conductors are disposed proximate to the central electrical conductor, such that the central electrical conductor and the one or more additional electrical conductors form a core of the electrical cable. Additionally, the electrical cable includes one or more fillers disposed between the one or more additional electrical conductors configured to partially occupy one or more interstices formed between the one or more additional electrical conductors. Also, the electrical cable includes a first layer of armor wires disposed circumferentially around an external surface of the core, such that the first layer of armor wires is partially embedded within an inner carbon fiber reinforced polymer layer, such that the first layer of armor wires is encapsulated in an isolation layer, and a second layer of armor wires disposed circumferentially around the first layer of armor wires, such that the second layer of armor wires is partially embedded within an outer carbon fiber reinforced polymer layer.

In certain embodiments, an electrical cable includes a central electrical conductor disposed in a center portion of the electrical cable and one or more additional electrical conductors, such that the one or more additional electrical conductors are disposed proximate to the central electrical conductor, such that the central electrical conductor and the one or more additional electrical conductors form a core of the electrical cable. Additionally, the electrical cable includes one or more fillers disposed between the one or more additional electrical conductors configured to partially occupy one or more interstices formed between the one or more additional electrical conductors and a metal tape strip configured to wrap around the core and the one or more fillers. Also, the electrical cable includes a first layer of armor wires disposed circumferentially around an external surface of the core, such that the first layer of armor wires is partially embedded within an inner carbon fiber reinforced polymer layer, and a second layer of armor wires disposed circumferentially around the first layer of armor wires, such that the second layer of armor wires is partially embedded within an outer carbon fiber reinforced polymer layer.

In certain embodiments, an electrical cable includes a central electrical conductor disposed in a center portion of the electrical cable, such that the central electrical conductor comprises a fiber optic cable, and one or more additional electrical conductors, such that the one or more additional electrical conductors are disposed proximate to the central electrical conductor, such that the central electrical conductor and the one or more additional electrical conductors form a core of the electrical cable. Additionally, the electrical cable includes one or more fillers disposed between the one or more additional electrical conductors configured to partially occupy one or more interstices formed between the one or more additional electrical conductors. Also, the electrical cable includes a first layer of armor wires disposed circumferentially around an external surface of the core, such that the first layer of armor wires is partially embedded within an inner carbon fiber reinforced polymer layer, and a second layer of armor wires disposed circumferentially around the first layer of armor wires, wherein the second layer of armor wires is partially embedded within an outer carbon fiber reinforced polymer layer.

Various refinements of the features noted above may exist in relation to various aspects of the present disclosure. Further features may be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic view of a coiled tubing unit configured to facilitate drilling and production operations, in accordance with aspects of the present disclosure;
FIG. 2 is a cross-sectional view of a portion of coiled tubing that illustrates an electrical cable and an annular region of the coiled tubing, in accordance with aspects of the present disclosure;
FIG. 3 is a cross-sectional view of an embodiment of the electrical cable, in accordance with aspects of the present disclosure;
FIG. 4 is a cross-sectional view of an additional embodiment of the electrical cable, in accordance with aspects of the present disclosure;
FIG. 5 is a cross-sectional view of an additional embodiment of the electrical cable, in accordance with aspects of the present disclosure;
FIG. 6 is a cross-sectional view of an additional embodiment of the electrical cable, in accordance with aspects of the present disclosure;
FIG. 7 is a cross-sectional view of an additional embodiment of the electrical cable, in accordance with aspects of the present disclosure;
FIG. 8 is a cross-sectional view of an additional embodiment of the electrical cable, in accordance with aspects of the present disclosure;
FIG. 9 is a cross-sectional view of an additional embodiment of the electrical cable, in accordance with aspects of the present disclosure;
FIG. 10 is a cross-sectional view of an additional embodiment of the electrical cable, in accordance with aspects of the present disclosure;
FIG. 11 is a cross-sectional view of an additional embodiment of the electrical cable, in accordance with aspects of the present disclosure;
FIG. 12 is a cross-sectional view of an additional embodiment of the electrical cable, in accordance with aspects of the present disclosure;
FIG. 13 is a cross-sectional view of an additional embodiment of the electrical cable, in accordance with aspects of the present disclosure;
FIG. 14 is a cross-sectional view of an additional embodiment of the electrical cable, in accordance with aspects of the present disclosure;
FIG. 15 is a cross-sectional view of an additional embodiment of the electrical cable, in accordance with aspects of the present disclosure;
FIG. 16 is a cross-sectional view of an additional embodiment of the electrical cable, in accordance with aspects of the present disclosure;
FIG. 17 is a cross-sectional view of an additional embodiment of the electrical cable, in accordance with aspects of the present disclosure;
FIG. 18 is a cross-sectional view of an additional embodiment of the electrical cable, in accordance with aspects of the present disclosure; and
FIG. 19 is a cross-sectional view of an additional embodiment of the electrical cable, in accordance with aspects of the present disclosure.

### DETAILED DESCRIPTION

Certain embodiments commensurate in scope with the present disclosure are summarized below. These embodiments are not intended to limit the scope of the disclosure, but rather these embodiments are intended only to provide a brief summary of certain disclosed embodiments. Indeed, the present disclosure may encompass a variety of forms that may be similar to or different from the embodiments set forth below.

As used herein, the term "coupled" or "coupled to" may indicate establishing either a direct or indirect connection (e.g., where the connection may not include or include intermediate or intervening components between those coupled), and is not limited to either unless expressly referenced as such. The term "set" may refer to one or more items. Wherever possible, like or identical reference numerals are used in the figures to identify common or the same elements. The figures are not necessarily to scale and certain features and certain views of the figures may be shown exaggerated in scale for purposes of clarification.

As used herein, the terms "inner" and "outer"; "up" and "down"; "upper" and "lower"; "upward" and "downward"; "above" and "below"; "inward" and "outward"; and other like terms as used herein refer to relative positions to one another and are not intended to denote a particular direction or spatial orientation. The terms "couple," "coupled," "connect," "connection," "connected," "in connection with," and "connecting" refer to "in direct connection with" or "in connection with via one or more intermediate elements or members."

Furthermore, when introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment," "an embodiment," or "some embodiments" of the present disclosure are not intended to be interpreted as excluding the existence of additional embodiments that also incorporate the recited features. Furthermore, the phrase A "based on" B is intended to mean that A is at least partially based on B. Moreover, unless expressly stated otherwise, the term "or" is intended to be inclusive (e.g., logical OR) and not exclusive (e.g., logical XOR). In other words, the phrase A "or" B is intended to mean A, B, or both A and B.

As mentioned above, operators may utilize the coiled tubing unit for drilling or intervention operations in the borehole. For example, an intervention application for coiled tubing units may include removing organic scale or other mineral buildup that may restrict the flow of resources from the reservoir up to the surface through the borehole. As part of these intervention operations, the coiled tubing units may include drilling tools at a downhole end of the coiled tubing. These drilling tools output this telemetry data and receive electrical power via an electrical cable that is run through an annular region defined by an inner diameter of the coiled tubing. During these drilling or intervention operations, the operators may pump pressurized liquids and/or gases downhole through the coiled tubing. These pressurized liquids and/or gases create a harsh environment for the electrical cable inside the annular region of the coiled tubing. Some electrical cables may include multiple conductors that may be covered by a polymer coating, but these polymer coatings may permit moisture ingression or gas diffusion from the harsh environment, enabling the gases and liquids to interface with the conductors inside the electrical cable. Further, these harsh conditions may also deteriorate the durability and mechanical properties of the electrical cables, leading to premature wear and breakage. Taken together, the conditions present inside the annular region of the coiled tubing may lead to electrical, mechanical, and telemetry issues that may contribute to a reduced life expectancy of the electrical cable. Efforts to improve the coatings and/or protection mechanisms for the conductors may be advantageous.

With this in mind, present embodiments described herein are directed towards systems and methods for providing electric power to downhole tooling used by oilfield drilling and production systems. During drilling operations, reservoirs may experience conditions (e.g., low formation pressure, organic scale buildup, etc.) that cause operators to engage in intervention operations. For example, when the reservoir experiences a low formation pressure, the reservoir may be unable to produce resources up through a borehole due to the formation pressure being less than a pressure exerted by a hydrostatic column. To counteract this issue, the operators may utilize a coiled tubing unit to perform intervention operations (e.g., well interventions, reservoir stimulation optimization, etc.) to ensure that the formation pressure is greater than the pressure from the hydrostatic column. That is, the operator may use the coiled tubing unit to direct pressurized liquids and/or gases downhole to the base of the borehole in the reservoir, thereby reducing the density of the hydrostatic column. As a result, this intervention operation balances forces generated by the pressure of the hydrostatic column and enables the reservoir to resume flowing and producing resources.

In other embodiments, operators may utilize the coiled tubing unit for drilling or intervention operations in the borehole. For example, an intervention application for coiled tubing units may include removing organic scale or other mineral buildup that may restrict the flow of resources from the reservoir up to the surface through the borehole. As part of these intervention operations, the coiled tubing units often include drilling tools at a downhole end of the coiled tubing. In certain embodiments, these drilling tools communicate with the surface and provide telemetry data relating to the drilling or maintenance operations performed by the coiled tubing units. Additionally, these drilling tools output this telemetry data and receive electrical power via an electrical cable that is run through an annular region defined by an inner diameter of the coiled tubing. As discussed previously, during drilling or maintenance operations, the operators may pump pressurized liquids and/or gases downhole through the coiled tubing. These pressurized liquids and/or gases create a harsh environment (e.g., high temperature, high pressure, acidic and/or corrosive liquids, etc.) for the electrical cable inside the annular region of the coiled tubing. Some electrical cables may include multiple conductors that may be covered by a polymer coating, but these polymer coatings may permit moisture ingression or gas diffusion from the harsh environment, enabling the gases and liquids to interface with the conductors inside the electrical cable. Further, these harsh conditions may also deteriorate the durability and mechanical properties of conventional electrical cables, leading to premature wear and breakage. Taken together, the conditions present inside the annular region of the coiled tubing may lead to electrical, mechanical, and telemetry issues that may contribute to a reduced life expectancy of the electrical cable.

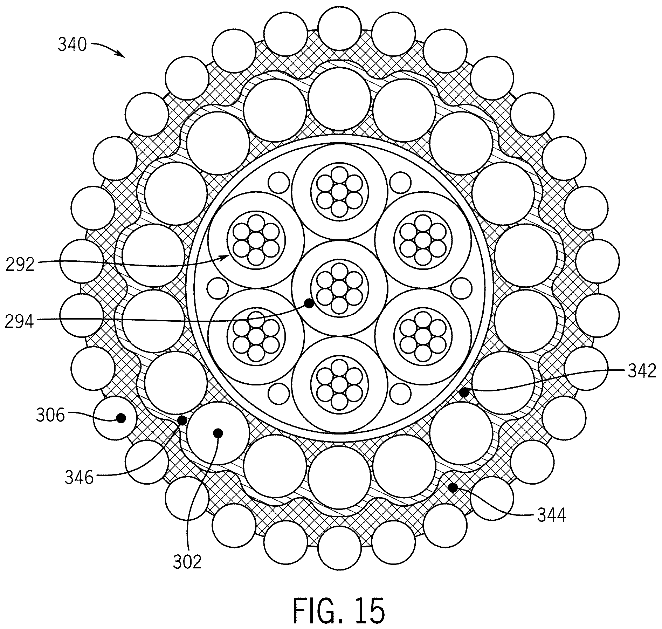

With this in mind, present embodiments include an electrical cable that provides improved protection for the conductors disposed within the electrical cable. For example, as will be discussed in more detail below with reference to FIG. 15, the electrical cable may include a hepta-core of conductors, defined by a single central conductor, with a hexagonal arrangement of six conductors disposed circumferentially around the central conductor. In some embodiments, as part of the core of the electrical cables, multiple fillers may be disposed between the six conductors in the hexagonal arrangement. These fillers, as their name suggests, may help to fill the interstices that may be present as a result of the geometry of the hexagonal arrangement of conductors. Further, a gunk-polymer may be introduced to fill any remaining interstices that may be present within the hepta-core of conductors and the fillers. In certain embodiments, the hepta-core, fillers, and gunk-polymer may be wrapped by a metal tape strip, such that the metal tape strip encapsulates the hepta-core, fillers, and gunk polymer.

Present embodiments of the electrical cable may also include a matrix of galvanized armor wires (GIPS) that provide additional layers of protection from the harsh environment that may be present in the annular region of the coiled tubing. That is, a first layer (e.g., intermediate layer, isolation layer) of GIPS may be disposed circumferentially around the taped hepta-core. In some embodiments, the first layer of GIPS may be embedded in an inner layer of a carbon fiber reinforced polymer that may be extruded over the taped hepta-core, thereby ensuring that any interstices between the first layer of GIPS and the taped core may be at least partially filled. To provide an additional layer of protection from acids and other corrosive fluids, the first layer of GIPS may be covered by a layer of polyether ether ketone (PEEK) material.

In other embodiments, a second layer (e.g., outer layer, external layer) of GIPS may be disposed circumferentially around the first layer of GIPS. The second layer of GIPS may be at least partially embedded within an outer layer of carbon fiber reinforced polymer that may be extruded over the PEEK-encapsulated first layer of GIPS. The outer layer of carbon fiber reinforced polymer may ensure that the interstices that may be present between the first layer of GIPS and the second layer of GIPS may be at least partially filled. Additionally or alternatively, the outer layer of carbon fiber reinforced polymer may limit slippage or undesired rotation between the first and the second layer of GIPS.

Taken together, the matrix of GIPS, the PEEK layer, and the metal tape strip may provide improved protection from the high pressures, high temperatures, and acidic liquids and gases that may fill the annular region of the coiled tubing. As a result, the present embodiments enable the electrical cables to provide power to the drilling tools, facilitate communications between drilling tools and the surface, and improve mechanical strength and longevity of the electrical cable.

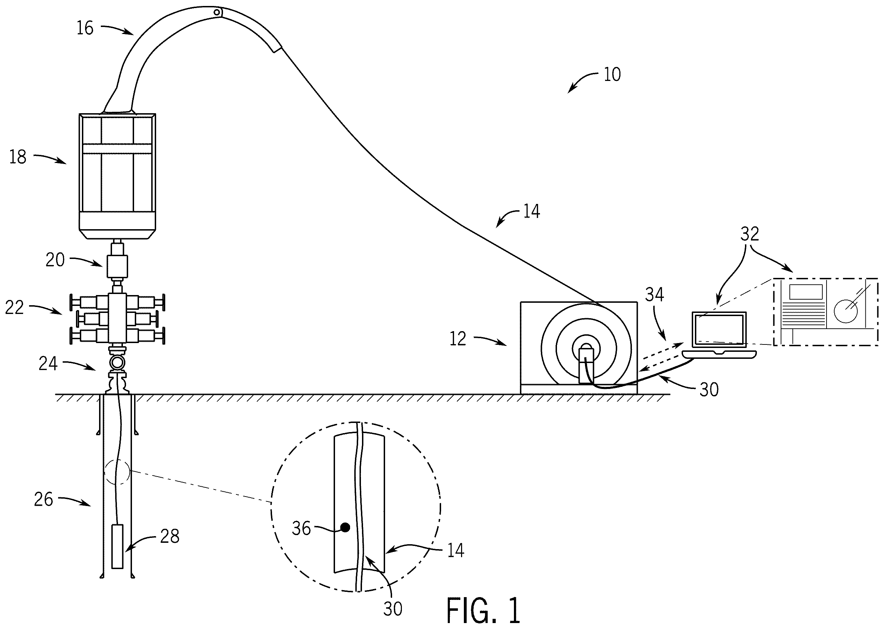

With the foregoing in mind, FIG. 1 illustrates a coiled tubing unit 10 (CTU, coiled tubing drilling equipment) that may be used to perform intervention operations (e.g., well interventions, reservoir stimulation optimization, etc.) on a borehole 26. In the illustrated embodiment, the CTU 10 includes a reel 12 that may be configured to spool a length of coiled tubing 14. In some embodiments, the reel 12 may be coupled to a vehicle that enables the reel 12 to be mobile and be transported between various drilling and production sites. In other embodiments, the reel 12 may be fixed to a surface onsite at the drilling and production site. The coiled tubing 14 may spool about the reel 12 and remain there for storage and/or transport purposes until it is ready for use. When an operator determines that the coiled tubing 14 may be used for an above-mentioned maintenance operation, the coiled tubing 14 may be unspooled and directed towards a gooseneck 16, as discussed in further detail below. In certain embodiments, the coiled tubing 14 may be a continuous length, such that the coiled tubing 14 may not be subject to a series of "making or breaking" connections between multiple joints of the tubing, as may be the case with other maintenance systems. For example, the coiled tubing 14 may range in length between 2,000 feet to 30,000 feet (i.e., 600 - 9000 meters), however, any suitable length of coiled tubing 14 is considered within the scope of the various embodiments of the present disclosure.

As the coiled tubing 14 unspools off the reel 12, the coiled tubing 14 may be directed to the gooseneck 16 that may be disposed at a top of a drilling structure. The gooseneck 16 may be configured to receive the coiled tubing 14 from the reel 12 and may re-direct the coiled tubing 14 downwards toward the borehole 26. As shown, the gooseneck 16 is configured to direct the coiled tubing 14 over a bend radius, enabling the coiled tubing to enter the borehole 26 without any sharp bends or drastic angular transformations. In the illustrated embodiment, the gooseneck 16 is disposed above an injector head 18 and the gooseneck 16 is configured to guide the coiled tubing 14 into the injector head 18. In some embodiments, the injector head 18 may be configured to straighten the coiled tubing 14 prior to the coiled tubing 14 entering the borehole 26. Additionally or alternatively, the injector head 18 may regulate the movement of the coiled tubing 14 in and out of the borehole 26 during the maintenance and/or drilling operations. For example, the injector head 18 may apply a traction force to the coiled tubing 14 that enables the coiled tubing to move through the borehole 26. By virtue of the injector head 18, the coiled tubing 14 may enter the borehole 26 while oriented in a substantially vertical orientation that may be similar to the orientation of the borehole 26.

Upon exiting the injector head 18, the coiled tubing 14 may enter a stripper assembly 20. The stripper assembly 20 may be configured to receive the coiled tubing 14 from the injector head 18, and may provide a dynamic seal around the coiled tubing 14 prior to entering the borehole 26. By dynamically sealing the coiled tubing 14, the stripper assembly 20 enables the coiled tubing 14 to run in and out of the borehole 26 without encountering pressure issues. Additionally, the CTU 10 may include a blowout preventer (BOP) 22 and/or other additional pressure regulation components (e.g., Christmas tree, spools, valves, adapters, etc.). Taken together, the stripper assembly 20 and the BOP 22 ensure that pressure from the reservoir does not leak or escape during the maintenance operation.

In certain embodiments, the BOP 22 may include an annular channel that receives the coiled tubing 14 from the stripper assembly 20, and the annular channel may provide a passageway for the coiled tubing 14 to travel through to enter a wellhead 24. In some embodiments, the wellhead 24 may be configured to provide a mounting location for the BOP 22 and the additional pressure regulation components. Also, the wellhead 24 may provide a conduit that may enable the BOP 22 to communicate with fluids and gases from the borehole 26. In certain embodiments, the wellhead 24 is configured to facilitate the installation of casing and hangers during borehole 26 construction, while also serving as a junction point for the BOP 22, additional pressure regulation components, and the borehole 26. The wellhead 24 may include a wellhead channel that connects to the annular channel of the BOP 22, and enables the coiled tubing 14 to travel through the wellhead 24 and into the borehole 26.

In the illustrated embodiment, the coiled tubing 14 includes one or more drilling tools 28 coupled to a downhole end of the coiled tubing 14. In some embodiments, the drilling tools 28 may be configured to perform intervention operations (cleaning organic scale build up, removal of proppant, sand, and other fine materials, etc.) to cleanout and remove materials that may block the flow of subterranean production resources through the installed tubing and casing. In other embodiments, the drilling tools 28 may be configured to deliver high pressure nitrogen gas into the fluid column to stimulate the flow of the production resources. In these examples, the coiled tubing 14 is configured to provide the cleaning fluids (e.g., brine, saltwater-brine mixture, acids, etc.) and gases (e.g., nitrogen, pressurized air, etc.) to the drilling tools 28.

To perform these maintenance operations, the drilling tools 28 may utilize electrical power. In other embodiments, the drilling tools 28 may include data-gathering components (e.g., sensors, cameras, temperature and pressure sensing equipment, transducers, etc.) that are configured to measure conditions and operational parameters in the borehole 26. To provide the electrical power to the drilling tools 28, and to enable the drilling tools 28 to communicate the gathered data to the surface, an electrical cable 30 may run through an inside annular space 36 of the coiled tubing 14. The electrical cable 30 may be configured to provide electrical power to the drilling tools 28, while additionally configured to transmit the gathered data to the surface.

On the surface, the electrical cable 30 may be communicatively coupled with data acquisition equipment 32. The data acquisition equipment 32 may be configured to receive the data gathered by the drilling tools 28, process the data, display the processed data via a visual interface (e.g., a GUI, a display screen, a monitor, etc.), and, based on the processed data, output a control signal to the drilling tools 28 via the electrical cable 30. In the illustrated embodiment, the data acquisition equipment 32 is configured to output and receive telemetry data 34 (e.g., gathered data, electrical power, outputted control signal) from the electrical cable 30 disposed inside the coiled tubing 14. Thus, an operator on the surface may receive data and information relating to conditions downhole in the borehole 26, and provide instructions to the data acquisition equipment 32 to output the control signal to begin, continue, alter, or terminate the maintenance operation. In other embodiments, the data acquisition equipment 32 may be configured to automatically output the control signal in response to receiving the telemetry data from the drilling tools 28 via the electrical cable 30.

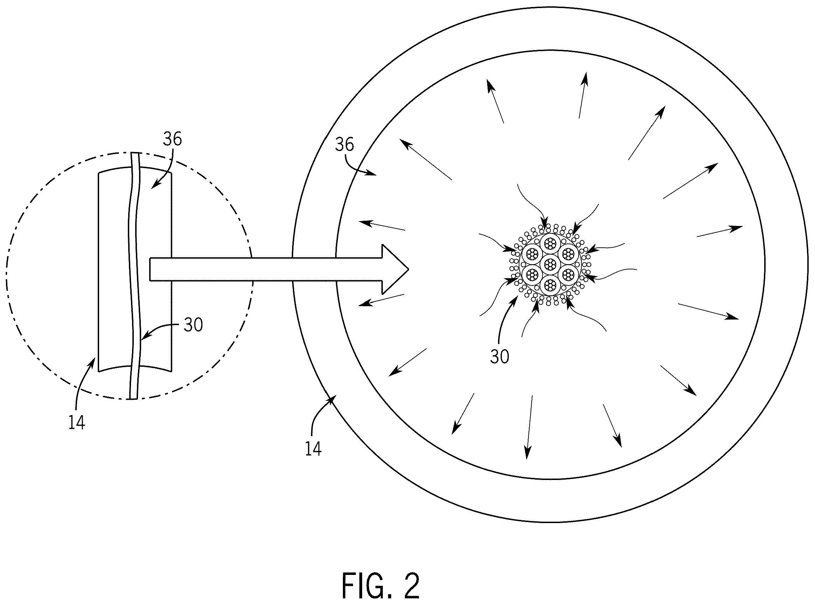

As discussed above, the coiled tubing 14 may be configured to provide high-pressure gases and a variety of liquids through the inside annular space 36 of the coiled tubing 14 to the drilling tools 28 disposed at the downhole end of the coiled tubing 14. Turning to FIG. 2, the electrical cable 30 is shown disposed in the inside annular space 36 of the coiled tubing 14. By virtue of this arrangement, the electrical cable 30 may be exposed to the high-pressure gases and variety of liquids that may be provided to the drilling tools 28 at the downhole end of the coiled tubing 14. In some cases, the electrical cable 30 may be exposed to this harsh environment for an extended period of time (e.g., hours, days, weeks, etc.). Some electrical cables may utilize a polymer coating to protect one or more electrical conductors that are disposed inside the electrical cable 30. The electrical conductors are configured to transmit the telemetry data between the drilling tools 28 and the data acquisition equipment 32. Some electrical cables exposed to an environment such as the inside annular space 36 of the coiled tubing 14 may experience telemetry issues resulting from the gases or liquids migrating or diffusing through the polymer coating. In other cases, some electrical cables may experience mechanical issues that tend to lead to breaking, irregular wear, or failure of the electrical cable.

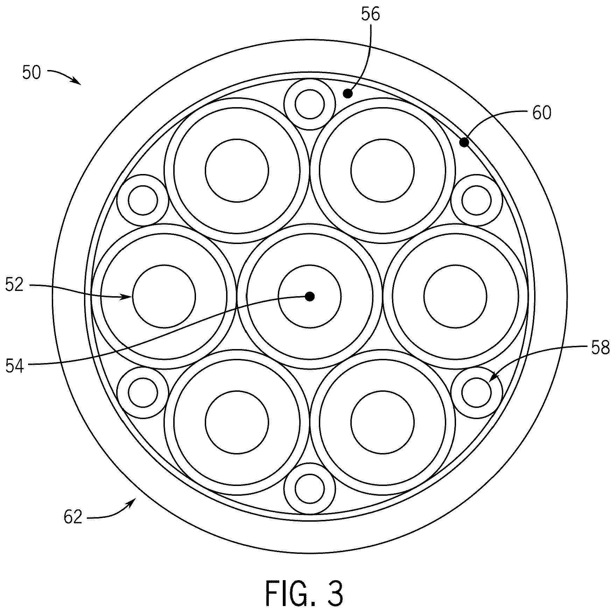

FIG. 3 illustrates a cross-sectional view of an embodiment of an electrical cable 50 according to aspects of the present disclosure. In the illustrated embodiment, the electrical cable 50 includes multiple conductors 52 arranged in a "hepta-core" configuration. In some embodiments, the conductors 52 may have a sufficiently cylindrical shape with a sufficiently circular cross-section, while in other embodiments, the conductors 52 may incorporate a variety of geometrical shapes with varying cross-sections (square, rectangular, hexagonal, trapezoidal, triangular, etc.). In other embodiments, the electrical cable 50 may include a single (mono-core configuration) electrical conductor 52, two electrical conductors 52 (a dual or coaxial core configuration), or an otherwise suitable number of electrical conductors 52 as part of the core of the electrical cable 50. In the hepta-core configuration, the electrical cable 50 may include a central conductor 54 disposed substantially in the center of the electrical cable 50, and six (6) additional electrical conductors 52 disposed circumferentially around the outer perimeter of the central conductor 54. In some embodiments, the diameters of the central conductor 54 and the additional electrical conductors 52 may be equal, and in other embodiments, the diameter of the central conductor 54 may be larger or smaller than the diameters of the additional electrical conductors 52.

In the hepta-core configuration, based on geometrical constraints of the cylindrical electrical conductors 52, 54, interstices 56 may form between the electrical conductors 52, 54. In the context of the present application, interstices may generally refer to voids and/or spaces between the elements within the electrical cables. In the illustrated embodiment, the electrical cable 50 includes fillers 58 that are configured to fill the interstices 56 present in the electrical cable 50. The fillers 58 may be configured to provide additional support and protection for the conductors 52, 54 in the electrical cable 50. Additionally or alternatively, the electrical cable 50 may include a metal tape strip 60 that is configured to tape around the conductors 52, 54 and fillers 58. In certain embodiments, the metal tape strip 60 may utilize an adhesive or otherwise suitable means to fasten round the conductors 52, 54 and fillers 58. In a non-limiting embodiment, a metal strip 62 may be disposed circumferentially around the metal tape strip 60. In the illustrated embodiment, the metal strip 62 is welded (e.g., tungsten inert gas (TIG) welded, longitudinal lasered, gas tungsten arc welded (GTAW), etc.) in place, or otherwise suitably fastened around the electrical cable 50 and metal tape strip 60. In certain embodiments, the metal strip 62 may be configured to protect the fillers 58 and conductors 52, 54 from the harsh environment present in the annular inner space of the coiled tubing.

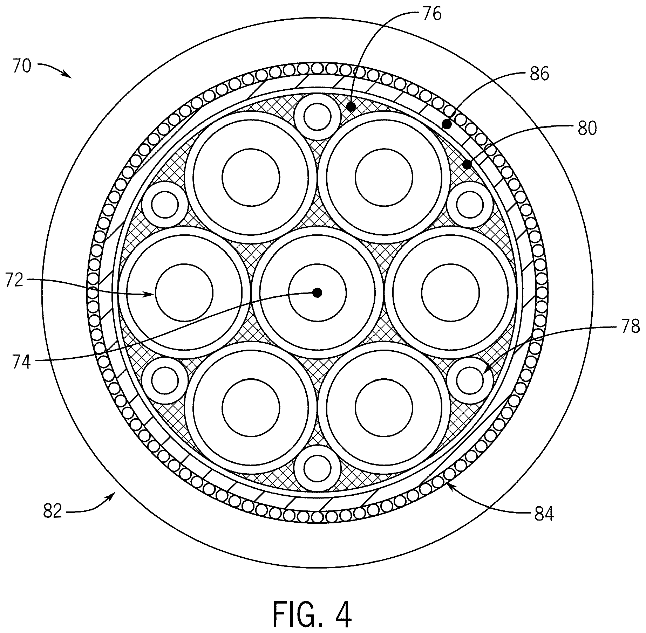

FIG. 4 illustrates a cross-sectional view of an embodiment of an electrical cable 70 according to aspects of the present disclosure. The electrical cable 70 may include conductors disposed circumferentially around a perimeter of a central conductor 74. The conductors 72 that are disposed within the electrical cable 70 may be analogous to the conductors 52 previously discussed that are disposed within the electrical cable 50 in FIG. 3. In certain embodiments, the central conductor 74 may be disposed in the center of the electrical cable 70, and the six (6) electrical conductors 72 may be positioned circumferentially around a perimeter of the central conductor 74 in the hepta-core configuration. In this configuration, the interstices that form between the various conductors 72 and central conductor 74 may be partially occupied with conductor fillers 78. The conductor fillers 78 may occupy the interstices in the electrical cable 70, while also providing communicative conductor functionality to this portion of the electrical cable 70. Additionally or alternatively, remaining areas inside the electrical cable 70 may be filled with a gunk polymer 76. The gunk polymer 76 may be configured to fill in the portions of the electrical cable 70 that are not filled by the conductor fillers 78. In some embodiments, the gunk polymer 76 may be made from various flexible materials (e.g., liquid rubber, rubber, urethane, nitrile rubber, etc.) and in other embodiments, the gunk polymer 76 may be poured into the interstices of the electrical cable 70 and dried in place.

In the illustrated embodiment, the core of conductors 72, 74 may be wrapped in a metal tape strip 80, similarly configured as the metal tape strip 60 in FIG. 3. Here, the metal tape strip 80 is configured to wrap the conductors 72, 74, the conductor fillers 78, and the gunk polymer, keeping the components in place and proving an extra layer of protection from the harsh environment in the annular interior space of the coiled tubing. In a non-limiting embodiment, the metal tape strip 80 may be wrapped in an additional polymer layer 86. The additional polymer layer 86 may be made from various thermoplastic materials (e.g., ETFE, perfluoroalkoxy alkane (PFA), FEP, polyolefin type like LDPE, HDPE, EPC, TPX and polycondensates like PEEK, PPS, etc.). Additionally or alternatively, a layer of additional protective conductors 84 may be disposed circumferentially around the outer perimeter of the additional polymer layer 86. The protective conductors 84 may provide an additional layer of protection for the conductors 72, 74 and support for the metal strip 82 disposed circumferentially around the layer of protective conductors 84. In some embodiments, the protective conductors 84 may have a smaller, larger, or substantially similar diameter as the conductors 72, 74 in the hepta-core of the electrical cable 70. In other embodiments, the electrical cable 70 may include a metal strip 82 disposed circumferentially around the layer of protective conductors 84. The metal strip 82 may be similarly fastened to the electrical cable 70 as the metal strip 62 is coupled to the electrical cable 50 in FIG. 3.

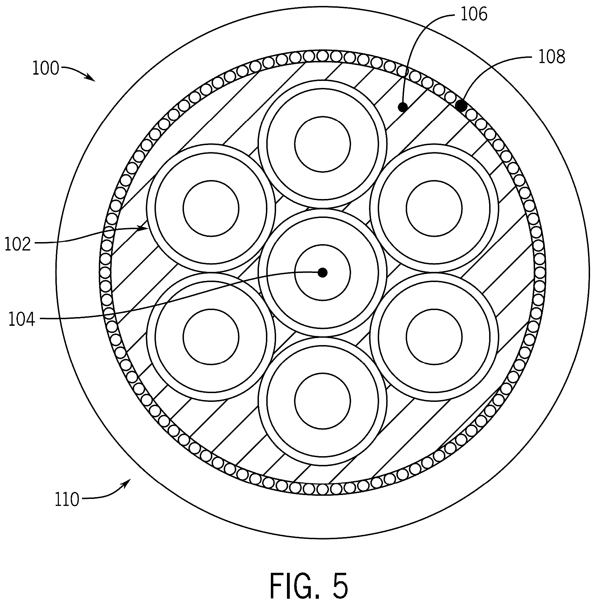

FIG. 5 illustrates a cross-sectional view of an embodiment of an electrical cable 100 according to aspects of the present disclosure. Similar to the embodiments shown in FIGS. 3 and 4, the electrical cable 100 may include conductors 102 disposed circumferentially around a perimeter of a central conductor 104. The conductors 102 that are disposed within the electrical cable 100 may be analogous to the conductors 52 previously discussed that are disposed within the electrical cable 50 in FIG. 3. In certain embodiments, the central conductor 104 may be disposed in the center of the electrical cable 100, and the six (6) electrical conductors 102 may be positioned circumferentially around a perimeter of the central conductor 104 in the hepta-core configuration. In the illustrated embodiment, the interstices that form between the various conductors 102, 104 may be filled with an extruded polymer 106. The extruded polymer 106 may be configured to fill in the portions of the electrical cable 100 that are not filled by the conductors 102, 104. The extruded polymer 106 may have improved mechanical properties (strength, tensile strength, yield strength, elasticity, etc.) that facilitates improved mechanical performance of the electrical cable 100. In some embodiments, the extruded polymer 106 may be made from various thermoplastic materials (e.g., ETFE, PFA, FEP , polyolefin type like LDPE, HDPE, EPC, TPX and polycondensates like PEEK, PPS, etc.) and in other embodiments, the extruded polymer 106 may be poured into the interstices of the electrical cable 100 and dried in place. In other embodiments, the extruded polymer 106 may be a thermo-plastic polymer.

In the illustrated embodiment, the electrical cable 100 includes a layer of additional protective conductors 108 that may be disposed circumferentially around the outer perimeter of the extruded polymer 106. In some embodiments, the protective conductors 108 may have a smaller, larger, or substantially similar diameter as the conductors 102, 104 in the hepta-core of the electrical cable 100. The protective conductors 108 may provide an additional layer of protection for the conductors 102, 104 and support for the metal strip 110 disposed circumferentially around the layer of protective conductors 108. In other embodiments, the electrical cable 100 may include a metal strip 110 disposed circumferentially around the layer of protective conductors 108. The metal strip 110 may be similarly fastened to the electrical cable 100 as the metal strip 62 is coupled to the electrical cable 50 in FIG. 3.

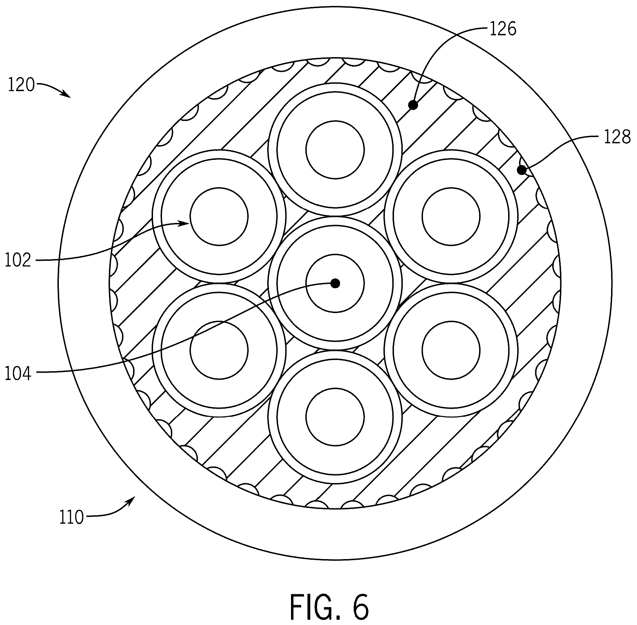

FIG. 6 illustrates a cross-sectional view of an embodiment of an electrical cable 120 according to aspects of the present disclosure. The electrical cable 120 is substantially similar to the electrical cable 100 in FIG. 5, except that the electrical cable 120 illustrated in FIG. 6 does not include the layer of protective conductors 108 from FIG. 5. Additionally or alternatively, the electrical cable 120 includes an extruded polymer 126 that includes an outer circumferential surface 128 that includes a grooved profile. In certain embodiments, the grooved profile of the outer circumferential surface 128 may be configured to provide sufficient support to the metal strip 110, and enables the electrical cable 120 to support pressure testing of the core of the electrical cable 120.

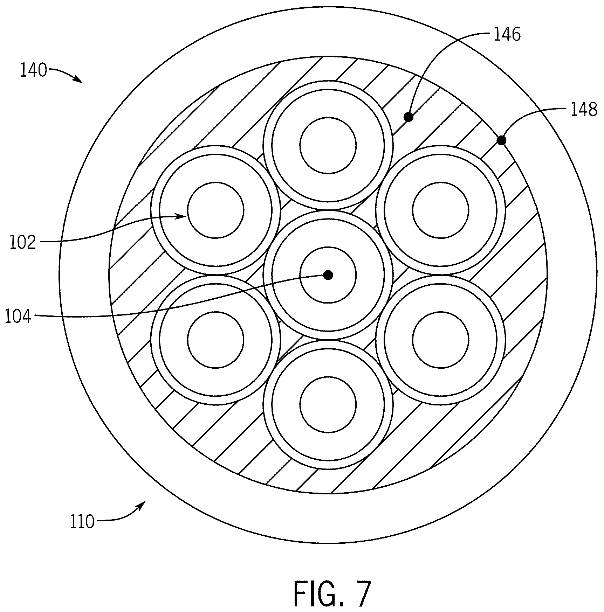

FIG. 7 illustrates a cross-sectional view of an embodiment of an electrical cable 140 according to aspects of the present disclosure. The electrical cable 140 is substantially similar to the electric cable 120 in FIG. 6, except that the electrical cable 140 in the illustrated embodiment may not include the extruded polymer 126 with an outer circumferential surface 128 that includes a grooved profile. In certain embodiments, the electrical cable 140 may include a modified extruded polymer 146 that may be configured to fill the interstices between the various conductors 102, 104 of the hepta-core configuration. In other embodiments, the modified extruded polymer 146 may include a modified outer circumferential surface 148 that may include a substantially cylindrical profile. In certain embodiments, the cylindrical profile of the outer circumferential surface 148 may be configured to provide sufficient support to the metal strip 110 and may improve manufacturability of the modified extruded polymer 146.

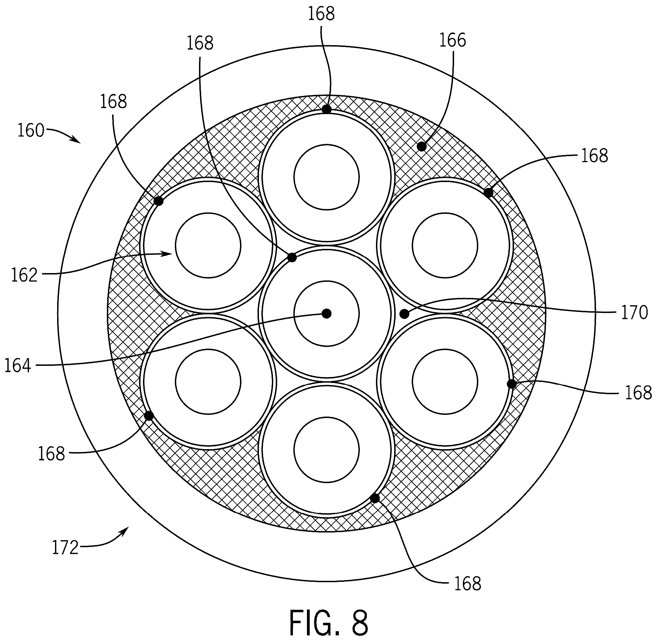

FIG. 8 illustrates a cross-sectional view of an embodiment of an electrical cable 160 according to aspects of the present disclosure. The electrical cable 160 may include conductors 162 disposed circumferentially around a perimeter of a central conductor 164. The conductors 162, 164 that are disposed within the electrical cable 160 may be analogous to the conductors previously discussed that are disposed within the electrical cables of the various embodiments illustrated in FIGS. 3-7. However, in the illustrated embodiment, the conductors 162, 164 may include an external polymer layer 168 configured to wrap around an outer circumferential surface of the various conductors 162, 164. The external polymer layer 168 may be made from a polymer layer of PEEK, polyetherketone (PEK), or PFA. The external polymer layer 168 may provide additional protection for the conductors 162, 164.

In some embodiments, cusp spaces 170 disposed between the central conductor 164 and the conductors 162 may not be filled with a polymer or void-filling substance. In certain embodiments, the central conductor 164 may be disposed in the center of the electrical cable 160, and the six (6) electrical conductors 162 may be positioned circumferentially around a perimeter of the central conductor 164 in the hepta-core configuration. In some embodiments, the interstices disposed between the conductors 162 may be filled with a short carbon fiber reinforced polymer 166. The short carbon fiber reinforced polymer 166 may be Tefzel, PFA, FEP, EPC, PEEK, polyketone, thermoplastic polyester elastomer, thermoplastic polymide or any suitable polymer having a concentration of 1.5% to 20% short carbon fiber. In a non-limiting embodiment, a metal strip 172 may be disposed circumferentially around the gunk polymer 166. In the illustrated embodiment, the metal strip 172 is welded (e.g., tungsten inert gas (TIG) welded, longitudinal lasered, gas tungsten arc welded (GTAW), etc.) in place, or otherwise suitably fastened around the electrical cable 160. In certain embodiments, the metal strip 172 may be configured to protect the conductors 162, 164 from the harsh environment present in the annular inner space of the coiled tubing.

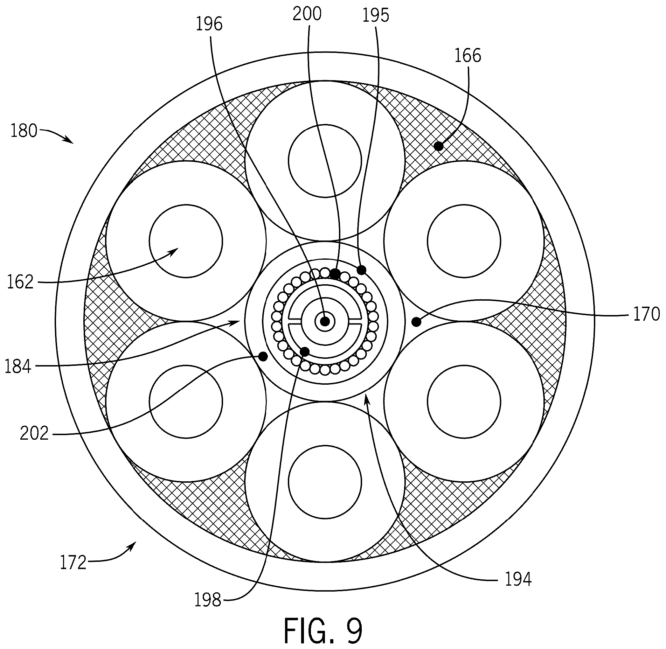

FIG. 9 illustrates a cross-sectional view of an embodiment of an electrical cable 180 according to aspects of the present disclosure. The embodiment of the electrical cable 180 is substantially similar to the embodiment of the electrical cable 160 in FIG. 8, except that the central conductor 184 in the illustrated embodiment may include a fiber optic cable 194 incorporated into the central conductor 184. In certain embodiments, the fiber optic cable 194 may be disposed within a metal tube 195 that runs through an inner annular cavity of the central conductor 184. In some embodiments, the fiber optic cable 194 may be configured in a non-coupled configuration that includes one or more (e.g., one, two, three, four, etc.) loose fibers 196 arranged within the fiber optic cable 194. As illustrated, the electrical cable 180 includes a single loose fiber 196. Additionally or alternatively, the fibers of the fiber optic cable 194 may be single mode, multi-mode, or a combination of both. In some embodiments, the metal tube 195 may be filled with a gel 198 (e.g., a thixotropic gel). The gel 198 may be configured to fill voids within the metal tube 195 and the fiber optic cable 194, and may be configured to secure the fibers in place within the fiber optic cable 194.

In some embodiments, the fiber optic cable 194 may include a layer of protective wires 200 disposed around an outer circumferential surface of the metal tube 195. In other embodiments, the layer of protective wires 200 may be disposed inside the metal tube, and may be disposed around an inner circumferential surface of the metal tube 195. The layer of protective wires 200 may be made from copper, a polymer, a composite, or otherwise suitable material. Additionally or alternatively, the metal tube 195 may include an additional layer of void filling material 202 that may surround the metal tube 195 to form an outer surface of the central conductor 184. Taken together, the fiber optic cable 194 enables the electrical cable 180 to transmit and receive additional formats of telemetry data between the drilling tools and the data acquisition equipment on the surface. In a non-limiting embodiment, a metal strip 172 similar to the one discussed previously in FIG. 8 may provide an exterior protection layer around the electrical cable 180.

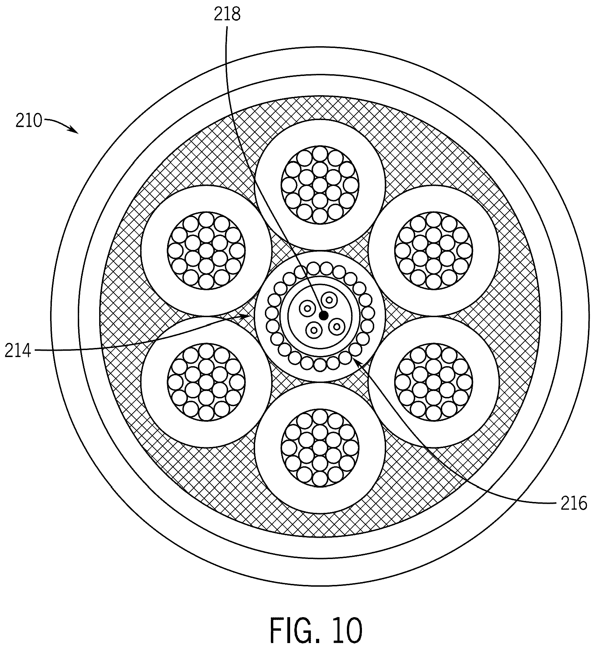

FIG. 10 illustrates a cross-sectional view of an embodiment of an electrical cable 210 according to aspects of the present disclosure. The embodiment of the electrical cable 210 is substantially similar to the embodiment of the electrical cable 180 depicted in FIG. 9, except that the fiber optic cable 216 may be configured in a non-coupled configuration that includes one or more (e.g., one, two, three, four, etc.) loose fibers 218 arranged within the fiber optic cable 216. As illustrated, the electrical cable 210 includes four (4) loose fibers 218. Additionally or alternatively, the fibers of the fiber optic cable 194 may be single mode, multi-mode, or a combination of both.

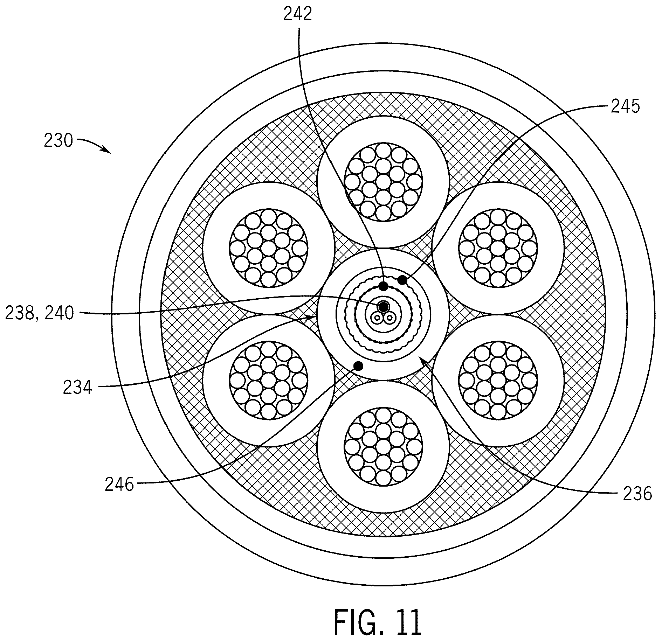

FIG. 11 illustrates a cross-sectional view of an embodiment of an electrical cable 230 according to aspects of the present disclosure. The embodiment of the electrical cable 230 is substantially similar to the embodiment of the electrical cables 180, 210 illustrated in FIGS. 9 and 10, except that the fiber optic cable 236 may be configured in a coupled configuration that includes one or more (e.g., one, two, three, four, etc.) fibers 238 that are packaged together in a microbundle 240. In the illustrated embodiment, the microbundle 240 may include three (3) fibers 238 packaged together into a copper wire 242. In some embodiments, the copper wire 242 may be shaped into one or more half-moon halves that are positioned together to form a housing for the fiber optic cable 236. In other embodiments, copper wire 242 is wrapped in a thin metal strip and welded and drawn to form a metal tube 245. Additionally or alternatively, the metal tube 245 may include an additional layer of void filling material 246 that may surround the metal tube 245 to form an outer surface of the central conductor 234.

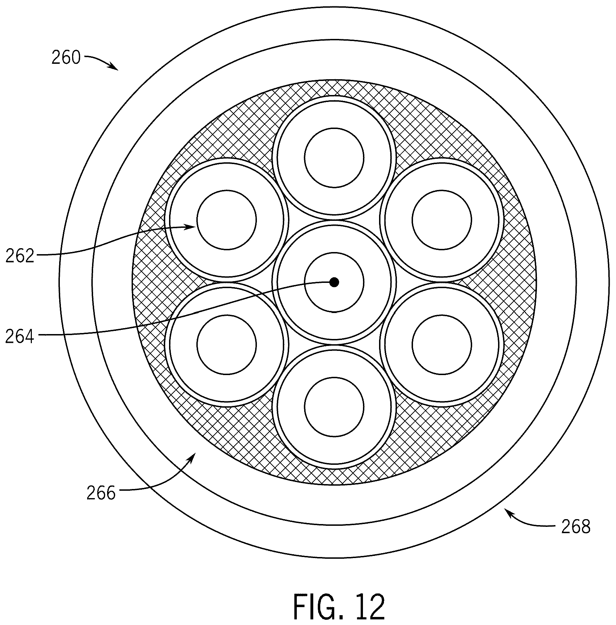

FIG. 12 illustrates a cross-sectional view of an embodiment of an electrical cable 260 according to aspects of the present disclosure. The embodiment of the electrical cable 260 is substantially similar to the embodiment of the electrical cable 160 illustrated in FIG. 8, however the electrical cable 260 may include an additional metal cladding encapsulation 268. In the illustrated embodiment, the conductors 262 and the central conductor 264 may be analogous to the conductors 162 and 164 from FIG. 8, and the metal strip 266 may be analogous to the metal strip 172 from FIG. 8. The additional metal cladding encapsulation 268 may be formed around the metal strip 266 and welded (e.g., tungsten inert gas (TIG) welded, longitudinal lasered, gas tungsten arc welded (GTAW), etc.) in place, or otherwise suitably fastened around the electrical cable 260 and metal strip 266.

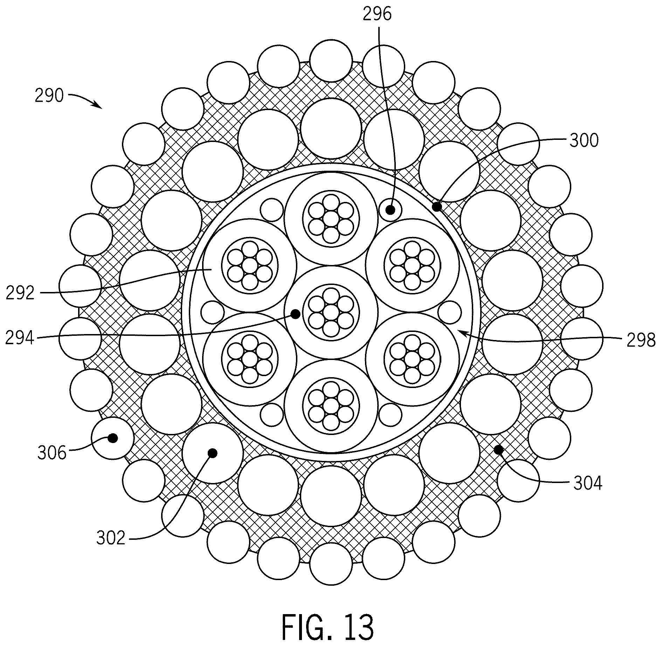

FIG. 13 illustrates a cross-sectional view of an embodiment of an electrical cable 290 according to aspects of the present disclosure. In the illustrated embodiment, the electrical cable 290 includes multiple conductors 292 arranged in the hepta-core configuration. In some embodiments, the conductors 292 may have a sufficiently cylindrical shape with a sufficiently circular cross-section, while in other embodiments, the conductors 292 may incorporate a variety of geometrical shapes with varying cross-sections (square, rectangular, hexagonal, trapezoidal, triangular, etc.). In other embodiments, the electrical cable 290 may include a single (mono-core configuration) electrical conductor 292, two electrical conductors 292 (a dual or coaxial core configuration), or an otherwise suitable number of electrical conductors 292 as part of the core of the electrical cable 290. In the hepta-core configuration, the electrical cable 290 may include a central conductor 294 disposed substantially in the center of the electrical cable 290, and six (6) additional electrical conductors 292 disposed circumferentially around the outer perimeter of the central conductor 294. In some embodiments, the diameters of the central conductor 294 and the additional electrical conductors 292 may be equal, and in other embodiments, the diameter of the central conductor 294 may be larger or smaller than the diameters of the additional electrical conductors 292.

In the illustrated embodiment, the electrical cable 290 includes fillers 296 that are configured to fill the interstices present in the electrical cable 290. The fillers 296 may be configured to provide additional support and protection for the conductors 292, 294 in the electrical cable 290. Additionally or alternatively, remaining areas inside the electrical cable 290 may be filled with a gunk polymer 298. The gunk polymer 298 may be configured to fill in the portions of the electrical cable 290 that are not occupied by the fillers 296. In some embodiments, the gunk polymer 298 may be made from various flexible materials (e.g., liquid rubber, rubber, urethane, nitrile rubber, etc.) and in other embodiments, the gunk polymer 298 may be poured into the interstices of the electrical cable 290 and dried in place. In certain embodiments, the electrical cable 290 may be wrapped in a metal tape strip 300 that is configured to tape around the conductors 292, 294 and fillers 296. In certain embodiments, the metal tape strip 300 may utilize an adhesive or otherwise suitable means to fasten round the conductors 292, 294 and fillers 296.

In a non-limiting embodiment, the electrical cable 290 may include a matrix of galvanized armor wires (GIPS) that provide additional layers of protection from the harsh environment that may be present in the annular region of the coiled tubing. For example a first layer 302 (e.g., an intermediate layer, isolation layer) of GIPS may be disposed circumferentially around the taped hepta-core. In certain embodiments, the first layer 302 of GIPS may be embedded in a layer of carbon fiber reinforced polymer 304. The layer of carbon fiber reinforced polymer (intermediate jacket layer) 304 may be extruded over the taped hepta-core, and may be configured to fill any interstices that may form between the first layer 302 of GIPS and the taped core. In other embodiments, a second layer 306 (e.g., outer layer, external layer) of GIPS may be disposed circumferentially around the first layer 302 of GIPS. In certain embodiments, each armor wire in the first layer 302 and the second layer 306 of GIPS may be armored with a corrosion resistant alloy material configured to improve protection of the conductors 292, 294 disposed within the core of the electrical cable 290. Additionally or alternatively, the intermediate jacket layer 304 may be configured to limit slippage and/or undesired rotation between the first 302 and the second 306 layers of GIPS.

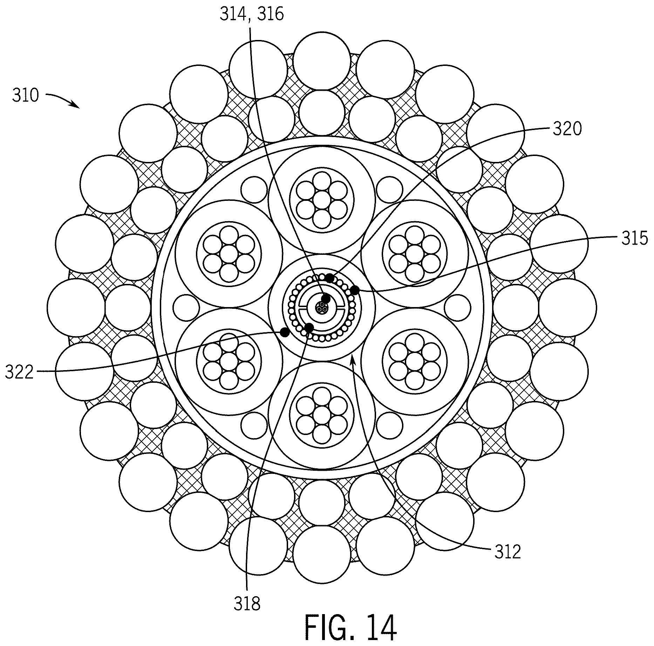

FIG. 14 illustrates a cross-sectional view of an embodiment of an electrical cable 310 according to aspects of the present disclosure. The embodiment of the electrical cable 310 is substantially similar to the embodiment of the electrical cable 290 illustrated in FIG. 13, except that the central conductor 312 in the illustrated embodiment may be may include a fiber optic cable 314 incorporated into the central conductor 312. In certain embodiments, the fiber optic cable 314 may be disposed within a metal tube 315 that runs through an inner annular cavity of the central conductor 312. In some embodiments, the fiber optic cable 314 may be configured in a non-coupled configuration that includes one or more (e.g., one, two, three, four, etc.) loose fibers 316 arranged within the fiber optic cable 314. As illustrated, the electrical cable 310 includes a single loose fiber 316. Additionally or alternatively, the fibers of the fiber optic cable 314 may be single mode, multi-mode, or a combination of both. In some embodiments, the metal tube 315 may be filled with a gel 318 (e.g., a thixotropic gel). The gel 318 may be configured to fill voids within the metal tube 315 and the fiber optic cable 314, and may be configured to secure the fibers in place within the fiber optic cable 314.

In some embodiments, the fiber optic cable 314 may include a layer of protective wires 320 disposed around an outer circumferential surface of the metal tube 315. The layer of protective wires 320 may be made from copper, a polymer, a composite, or otherwise suitable material. Additionally or alternatively, the metal tube 315 may include an additional layer of void filling material 322 that may surround the metal tube 315 to form an outer surface of the central conductor 312. Taken together, the fiber optic cable 314 enables the electrical cable 310 to transmit and receive additional formats of telemetry data between the drilling tools and the data acquisition equipment on the surface.

FIG. 15 illustrates a cross-sectional view of an embodiment of an electrical cable 340 according to aspects of the present disclosure. The embodiment of the electrical cable 340 is substantially similar to the embodiment of the electrical cable 290 depicted in FIG. 13, except that the first layer 302 of GIPS includes an additional layer of PEEK material 346. The PEEK material 346 is configured to provide an additional layer of protection from acids and other corrosive fluids. In certain embodiments, the first layer 302 of GIPS may be embedded in an inner layer 342 of a carbon fiber reinforced polymer that may be extruded over the taped hepta-core, thereby ensuring that any interstices between the first layer 302 of GIPS and the taped core may be at least partially filled.

In the illustrated embodiment, a second layer 306 of GIPS may be disposed circumferentially around the first layer 302 of GIPS. In some embodiments, the second layer 306 of GIPS may be at least partially embedded within an outer layer 344 of the carbon fiber reinforced polymer that may be extruded over the PEEK-encapsulated first layer 302 of GIPS. The outer layer 344 of carbon fiber reinforced polymer may ensure that the interstices that may be present between the fist layer 302 of GIPS and the second layer 306 of GIPS may be at least partially filled. As discussed previously, each armor wire in the first layer 302 and the second layer 306 of GIPS may be armored with a corrosion resistant alloy material configured to improve protection of the conductors 292, 294 disposed within the core of the electrical cable 340. Additionally or alternatively, the outer layer 344 of carbon fiber reinforced polymer may be configured to limit slippage and/or undesired rotation between the first 302 and the second 306 layers of GIPS.

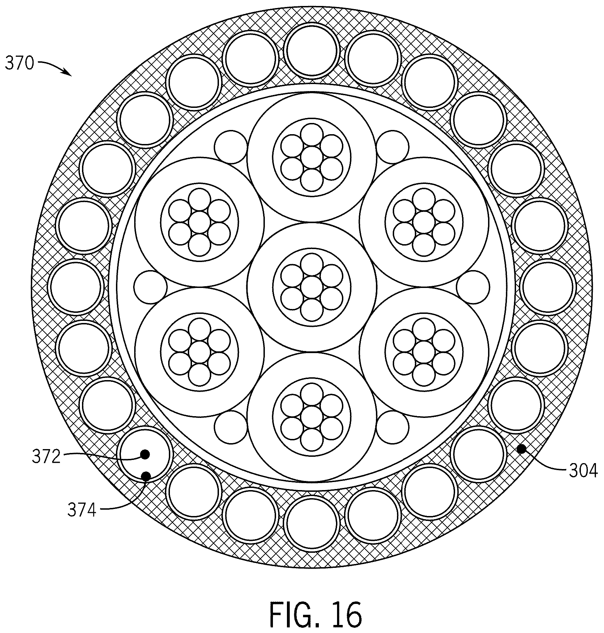

FIG. 16 illustrates a cross-sectional view of an embodiment of an electrical cable 370 according to aspects of the present disclosure. The embodiment of the electrical cable 370 is substantially similar to the embodiment of the electrical cable 290 depicted in FIG. 13, except that the matrix of armor wires may only include a layer 372 of GIPS individually encapsulated in an alloy, corrosion-resistant metal cladding 374 configured to isolate the individual armor wires from corrosive fluids. As illustrated, the layer 372 of GIPS and metal cladding 374 may be fully embedded in a layer of carbon fiber reinforced polymer 304. The layer of carbon fiber reinforced polymer 304 may be extruded over the taped hepta-core, and may be configured to fill any interstices that may form between the layer 372 of GIPS and the taped core.

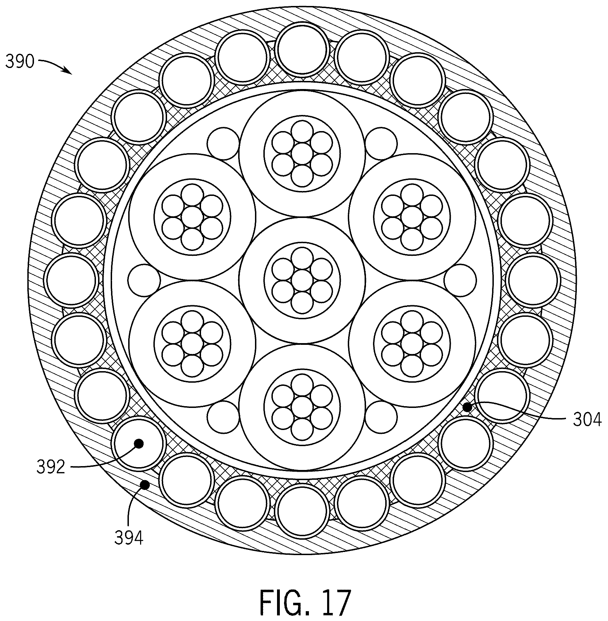

FIG. 17 illustrates a cross-sectional view of an embodiment of an electrical cable 390 according to aspects of the present disclosure. The embodiment of the electrical cable 390 is substantially similar to the embodiment of the electrical cable 370 depicted in FIG. 16, except that the layer 392 of GIPS may be encapsulated by an isolation layer 394 of PEEK material. In certain embodiments, the isolation layer 394 material may be made from PEK, PFA, carbon fiber reinforced EFTE (CFRZ), or an otherwise suitable protective material layer. Additionally or alternatively, the layer 392 of GIPS may be embedded in a layer of carbon fiber reinforced polymer 304. The layer of carbon fiber reinforced polymer 304 may be extruded over the taped hepta-core, and may be configured to fill any interstices that may form between the layer 392 of GIPS and the taped core.

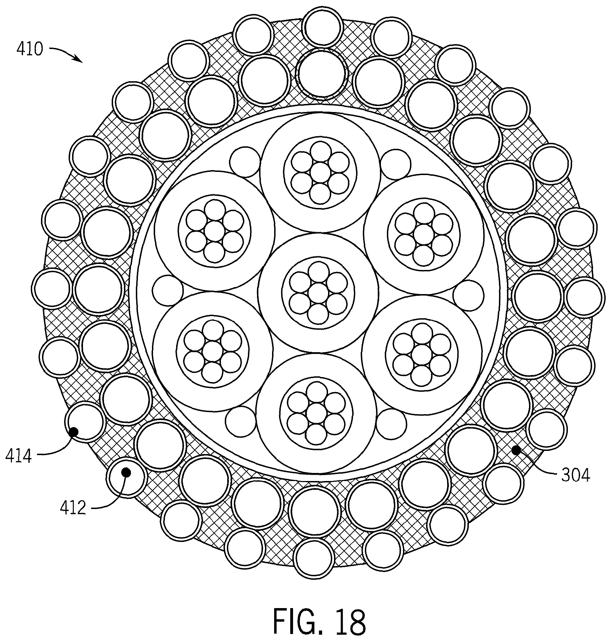

FIG. 18 illustrates a cross-sectional view of an embodiment of an electrical cable 410 according to aspects of the present disclosure. The embodiment of the electrical cable 410 is substantially similar to the embodiment of the electrical cable 370 depicted in FIG. 16, except that an additional layer 412 (outer layer) of armor wires is included. In the illustrated embodiment, each armor wire disposed in the additional layer 412 may be individually encapsulated in an alloy, corrosion-resistant metal cladding 414 configured to isolate the individual armor wires from corrosive fluids. Also, the additional layer 412 may be at least partially embedded within the layer of carbon fiber reinforced polymer 304. The layer of carbon fiber reinforced polymer 304 may be extruded over the taped hepta-core, and may be configured to fill any interstices that may form between the matrix of armor wires and the taped core.

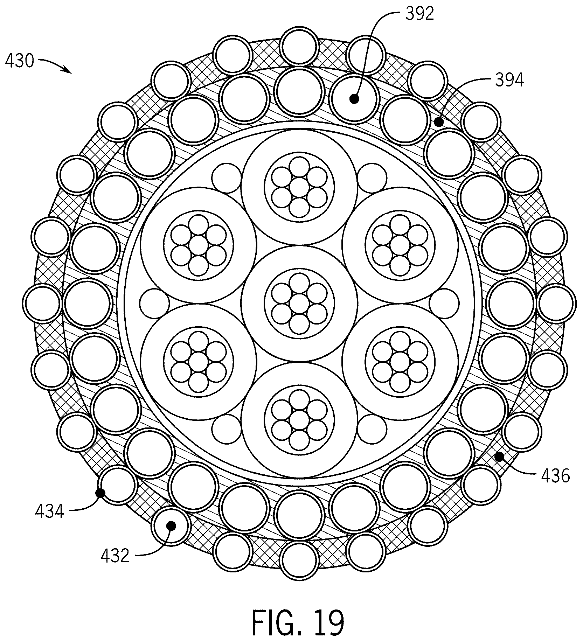

FIG. 19 illustrates a cross-sectional view of an embodiment of an electrical cable 430 according to aspects of the present disclosure. The embodiment of the electrical cable 430 is substantially similar to the embodiment of the electrical cable 390 depicted in FIG. 17, except that an additional layer 432 (outer layer) of armor wires is included. In the illustrated embodiment, each armor wire disposed in the additional layer 432 may be individually encapsulated in an alloy, corrosion-resistant metal cladding 434 configured to isolate the individual armor wires from corrosive fluids and/or gases. Also, the additional layer 432 may be at least partially embedded within a layer of carbon fiber reinforced polymer 436, such that the carbon fiber reinforced polymer 436 is disposed on an exterior circumferential surface of the PEEK material isolation layer 394 that encapsulates the first layer 392 of armor wires.

The technical effect of the disclosed embodiments includes improved protection from the high pressures, high temperatures, and acidic liquids and gases that may fill the annular region of the coiled tubing during maintenance operations. By using the disclosed embodiments, the electrical cable that is utilized to enable communication between the downhole drilling tools and the surface data acquisition equipment may experience increased longevity, improved mechanical properties, and improved resistance to corrosive fluids and gases present in the coiled tubing. Additionally, the electrical cable may include a fiber optic cable as part of the electrical cable, thereby increasing functionality and enabling the electrical cable to transmit a broader range of telemetry data between the downhole drilling tools and the surface data acquisition equipment.

The subject matter described in detail above may be defined by one or more clauses or embodiments as set forth below.

In certain embodiments, an electrical cable includes a central electrical conductor disposed in a center portion of the electrical cable and one or more additional electrical conductors, such that the one or more additional electrical conductors are disposed proximate to the central electrical conductor, such that the central electrical conductor and the one or more additional electrical conductors form a core of the electrical cable. Additionally, the electrical cable includes one or more fillers disposed between the one or more additional electrical conductors configured to partially occupy one or more interstices formed between the one or more additional electrical conductors. Also, the electrical cable includes a first layer of armor wires disposed circumferentially around an external surface of the core, such that the first layer of armor wires is partially embedded within an inner carbon fiber reinforced polymer layer, such that the first layer of armor wires is encapsulated in an isolation layer, and a second layer of armor wires disposed circumferentially around the first layer of armor wires, such that the second layer of armor wires is partially embedded within an outer carbon fiber reinforced polymer layer.

The electrical cable of the preceding embodiment, wherein the one or more additional electrical conductors are arranged in a hexagonal configuration, and wherein the one or more additional electrical conductors surround the central electrical conductor.

The electrical cable of any preceding embodiment, wherein the isolation layer comprises a PEEK material, a PEK material, a PFA material, a CFRZ material, or any combination thereof.

The electrical cable of any preceding embodiment, wherein the central electrical conductor comprises a fiber optic cable.

The electrical cable of any preceding embodiment, wherein the fiber optic cable includes one or more loose fibers, wherein the one or more loose fibers is a single mode, multi-mode, or a combination of both, a metal tube configured to encapsulate the one or more loose fibers, a gel disposed within the metal tube, wherein the gel is configured to fill voids within the metal tube and secure the one or more loose fibers within the metal tube, and one or more protective wires disposed around an outer circumferential surface of the metal tube, wherein the one or more protective wires are configured to protect the fiber optic cable from corrosive fluids and gases.

The electrical cable of any preceding embodiment, wherein the fiber optic cable includes one or more fibers configured in a coupled formation, and wherein the fibers in the coupled formation are packaged within a copper wire.

The electrical cable of any preceding embodiment, wherein each first layer armor wire includes an alloy, corrosion-resistant metal cladding, wherein the metal cladding is configured to isolate the first layer armor wire from corrosive fluids and gases.

The electrical cable of any preceding embodiment, wherein each second layer armor wire includes an alloy, corrosion-resistant metal cladding, wherein the metal cladding is configured to isolate the second layer armor wire from corrosive fluids and gases.

The electrical cable of any preceding embodiment, wherein the electrical cable includes a gunk polymer configured to partially occupy the one or more interstices of the electrical cable that are not occupied by the fillers, wherein the gunk polymer comprises a liquid rubber, rubber, urethane, nitrile rubber, or any combination thereof.

In certain embodiments, an electrical cable includes a central electrical conductor disposed in a center portion of the electrical cable and one or more additional electrical conductors, such that the one or more additional electrical conductors are disposed proximate to the central electrical conductor, such that the central electrical conductor and the one or more additional electrical conductors form a core of the electrical cable. Additionally, the electrical cable includes one or more fillers disposed between the one or more additional electrical conductors configured to partially occupy one or more interstices formed between the one or more additional electrical conductors and a metal tape strip configured to wrap around the core and the one or more fillers. Also, the electrical cable includes a first layer of armor wires disposed circumferentially around an external surface of the core, such that the first layer of armor wires is partially embedded within an inner carbon fiber reinforced polymer layer, and a second layer of armor wires disposed circumferentially around the first layer of armor wires, such that the second layer of armor wires is partially embedded within an outer carbon fiber reinforced polymer layer.

The electrical cable of the preceding embodiment, wherein the one or more additional electrical conductors are arranged in a hexagonal configuration, and wherein the one or more additional electrical conductors surround the central electrical conductor.

The electrical cable of any preceding embodiment, wherein the metal tape strip utilizes an adhesive to fasten round the core and the one or more fillers.

The electrical cable of any preceding embodiment, wherein each first layer armor wire and each second layer armor wire include an alloy, corrosion-resistant metal cladding, wherein the metal cladding is configured to isolate the first layer armor wire and the second layer armor wire from corrosive fluids and gases.

The electrical cable of any preceding embodiment, wherein the inner carbon fiber reinforced polymer layer and the outer carbon fiber reinforced polymer layer are configured prevent rotation between the first layer of armor wires and the second layer of armor wires.

In certain embodiments, an electrical cable includes a central electrical conductor disposed in a center portion of the electrical cable, such that the central electrical conductor comprises a fiber optic cable, and one or more additional electrical conductors, such that the one or more additional electrical conductors are disposed proximate to the central electrical conductor, such that the central electrical conductor and the one or more additional electrical conductors form a core of the electrical cable. Additionally, the electrical cable includes one or more fillers disposed between the one or more additional electrical conductors configured to partially occupy one or more interstices formed between the one or more additional electrical conductors. Also, the electrical cable includes a first layer of armor wires disposed circumferentially around an external surface of the core, such that the first layer of armor wires is partially embedded within an inner carbon fiber reinforced polymer layer, and a second layer of armor wires disposed circumferentially around the first layer of armor wires, wherein the second layer of armor wires is partially embedded within an outer carbon fiber reinforced polymer layer.

The electrical cable of the preceding embodiment, wherein the fiber optic cable includes one or more loose fibers, wherein the one or more loose fibers is a single mode, multi-mode, or a combination of both, a metal tube configured to encapsulate the one or more loose fibers, a gel disposed within the metal tube, wherein the gel is configured to fill voids within the metal tube and secure the one or more loose fibers within the metal tube; and one or more protective wires disposed around an outer circumferential surface of the metal tube, wherein the one or more protective wires are configured to protect the fiber optic cable from corrosive fluids and gases.

The electrical cable of any preceding embodiment, wherein the fiber optic cable includes one or more fibers configured in a coupled formation, and wherein the fibers in the coupled formation are packaged within a copper wire.

The electrical cable of any preceding embodiment, wherein each first layer armor wire includes an alloy, corrosion-resistant metal cladding, wherein the metal cladding is configured to isolate the first layer armor wire from corrosive fluids and gases.

The electrical cable of any preceding embodiment, wherein each second layer armor wire includes an alloy, corrosion-resistant metal cladding, wherein the metal cladding is configured to isolate the second layer armor wire from corrosive fluids and gases.

The electrical cable of any preceding embodiment, wherein the inner carbon fiber reinforced polymer layer and the outer carbon fiber reinforced polymer layer are configured prevent rotation between the first layer of armor wires and the second layer of armor wires.

The foregoing description, for purpose of explanation, has been described with reference to specific embodiments. However, the illustrative discussions above are not intended to be exhaustive or to limit the disclosure to the precise forms disclosed. Many modifications and variations are possible in view of the above teachings. Moreover, the order in which the elements of the methods described herein are illustrated and described may be re-arranged, and/or two or more elements may occur simultaneously. The embodiments were chosen and described in order to best explain the principals of the disclosure and its practical applications, to thereby enable others skilled in the art to best utilize the disclosure and various embodiments with various modifications as are suited to the particular use contemplated.

Finally, the techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. An electrical cable, comprising:
a central electrical conductor disposed in a center portion of the electrical cable;
one or more additional electrical conductors, wherein the one or more additional electrical conductors are disposed proximate to the central electrical conductor, wherein the central electrical conductor and the one or more additional electrical conductors form a core of the electrical cable;
one or more fillers disposed between the one or more additional electrical conductors configured to partially occupy one or more interstices formed between the one or more additional electrical conductors;
a first layer of armor wires disposed circumferentially around an external surface of the core, wherein the first layer of armor wires is partially embedded within an inner carbon fiber reinforced polymer layer, wherein the first layer of armor wires is encapsulated in an isolation layer; and
a second layer of armor wires disposed circumferentially around the first layer of armor wires, wherein the second layer of armor wires is partially embedded within an outer carbon fiber reinforced polymer layer.

2. The electrical cable of claim 1, wherein the one or more additional electrical conductors are arranged in a hexagonal configuration, and wherein the one or more additional electrical conductors surround the central electrical conductor.

3. The electrical cable of claim 1 or 2, wherein the central electrical conductor comprises a fiber optic cable.

4. The electrical cable of claim 3, wherein the fiber optic cable comprises:
one or more loose fibers, wherein the one or more loose fibers is a single mode, multi-mode, or a combination of both;
a metal tube configured to encapsulate the one or more loose fibers;
a gel disposed within the metal tube, wherein the gel is configured to fill voids within the metal tube and secure the one or more loose fibers within the metal tube; and
one or more protective wires disposed around an outer circumferential surface of the metal tube, wherein the one or more protective wires are configured to protect the fiber optic cable from corrosive fluids and gases.

5. The electrical cable of any one of the preceding claims, wherein each first layer armor wire comprises an alloy, corrosion-resistant metal cladding, wherein the metal cladding is configured to isolate the first layer armor wire from corrosive fluids and gases.

6. The electrical cable of claim 5, wherein each second layer armor wire comprises an alloy, corrosion-resistant metal cladding, wherein the metal cladding is configured to isolate the second layer armor wire from corrosive fluids and gases.

7. The electrical cable of any one of the preceding claims, wherein the electrical cable comprises a gunk polymer configured to partially occupy the one or more interstices of the electrical cable that are not occupied by the fillers, wherein the gunk polymer comprises a liquid rubber, rubber, urethane, nitrile rubber, or any combination thereof.

8. An electrical cable, comprising:
a central electrical conductor disposed in a center portion of the electrical cable;
one or more additional electrical conductors, wherein the one or more additional electrical conductors are disposed proximate to the central electrical conductor, wherein the central electrical conductor and the one or more additional electrical conductors form a core of the electrical cable;
one or more fillers disposed between the one or more additional electrical conductors configured to partially occupy one or more interstices formed between the one or more additional electrical conductors;
a metal tape strip configured to wrap around the core and the one or more fillers;
a first layer of armor wires disposed circumferentially around an external surface of the core, wherein the first layer of armor wires is partially embedded within an inner carbon fiber reinforced polymer layer; and
a second layer of armor wires disposed circumferentially around the first layer of armor wires, wherein the second layer of armor wires is partially embedded within an outer carbon fiber reinforced polymer layer.

9. The electrical cable of claim 8, wherein the one or more additional electrical conductors are arranged in a hexagonal configuration, and wherein the one or more additional electrical conductors surround the central electrical conductor.

10. The electrical cable of claim 8 or 9, wherein each first layer armor wire and each second layer armor wire comprise an alloy, corrosion-resistant metal cladding, wherein the metal cladding is configured to isolate the first layer armor wire and the second layer armor wire from corrosive fluids and gases.

11. The electrical cable of any one of the claims 8 - 10, wherein the inner carbon fiber reinforced polymer layer and the outer carbon fiber reinforced polymer layer are configured prevent rotation between the first layer of armor wires and the second layer of armor wires.

12. An electrical cable, comprising:
a central electrical conductor disposed in a center portion of the electrical cable, wherein the central electrical conductor comprises a fiber optic cable;
one or more additional electrical conductors, wherein the one or more additional electrical conductors are disposed proximate to the central electrical conductor, wherein the central electrical conductor and the one or more additional electrical conductors form a core of the electrical cable;
one or more fillers disposed between the one or more additional electrical conductors configured to partially occupy one or more interstices formed between the one or more additional electrical conductors;
a first layer of armor wires disposed circumferentially around an external surface of the core, wherein the first layer of armor wires is partially embedded within an inner carbon fiber reinforced polymer layer; and
a second layer of armor wires disposed circumferentially around the first layer of armor wires, wherein the second layer of armor wires is partially embedded within an outer carbon fiber reinforced polymer layer.

13. The electrical cable of claim 12, wherein the fiber optic cable comprises:
one or more loose fibers, wherein the one or more loose fibers is a single mode, multi-mode, or a combination of both;
a metal tube configured to encapsulate the one or more loose fibers;
a gel disposed within the metal tube, wherein the gel is configured to fill voids within the metal tube and secure the one or more loose fibers within the metal tube; and
one or more protective wires disposed around an outer circumferential surface of the metal tube, wherein the one or more protective wires are configured to protect the fiber optic cable from corrosive fluids and gases.

14. The electrical cable of claim 12 or 13, wherein each second layer armor wire comprises an alloy, corrosion-resistant metal cladding, wherein the metal cladding is configured to isolate the second layer armor wire from corrosive fluids and gases.

15. The electrical cable of any one of the claims 12 - 14, wherein the inner carbon fiber reinforced polymer layer and the outer carbon fiber reinforced polymer layer are configured prevent rotation between the first layer of armor wires and the second layer of armor wires.
